# EUROPÄISCHE PATENTSCHRIFT

(11) **EP 3 868 015 B1**
(45) Veröffentlichungstag und Bekanntmachung des Hinweises auf die Patenterteilung: **23.11.2022**
(21) Anmeldenummer: 19789952.9
(22) Anmeldetag: 16.10.2019
(51) Int. Cl.: H02N 2/02, H02N 2/06

(54) **LINEARANTRIEB**
LINEAR DRIVE
ENTRAÎNEMENT LINÉAIRE

(30) Priorität: 16.10.2018 DE 102018217709
(43) Veröffentlichungstag der Anmeldung: 25.08.2021
(73) Patentinhaber: Physik Instrumente (PI) GmbH & Co. KG, 76228 Karlsruhe (DE)
(72) Erfinder: KOC, Burhanettin, 76275 Ettlingen (DE)
(74) Vertreter: Grünecker Patent- und Rechtsanwälte PartG mbB
(86) Internationale Anmeldenummer: PCT/EP2019/078057
(87) Internationale Veröffentlichungsnummer: WO 2020/079062

(56) Entgegenhaltungen:
- EP-A1- 2 590 315
- WO-A2-98/19347
- DE-A1-102012 104 749
- KR-A- 20090 021 990
- US-A1- 2008 231 970
- US-A1- 2011 018 393
- RENNER CH ET AL: "A vertical piezoelectric inertial slider", REVIEW OF SCIENTIFIC INSTRUMENTS, Bd. 61, Nr. 3, März 1990 (1990-03), Seiten 965-967, XP002113873, ISSN: 0034-6748, DOI: 10.1063/1.1141450

## Beschreibung

Die vorliegende Erfindung betrifft einen Linearantrieb, insbesondere für Präzisions-Positioniereinrichtungen umfassend: eine Aktoreinheit mit wenigstens einem Aktor; zwei Führungselemente und ein Bewegungselement, wobei das Bewegungselement durch eine von der Aktoreinheit erzeugte Bewegung aufgrund eines Haftgleiteffekts entlang beider Führungselemente verstellbar ist.

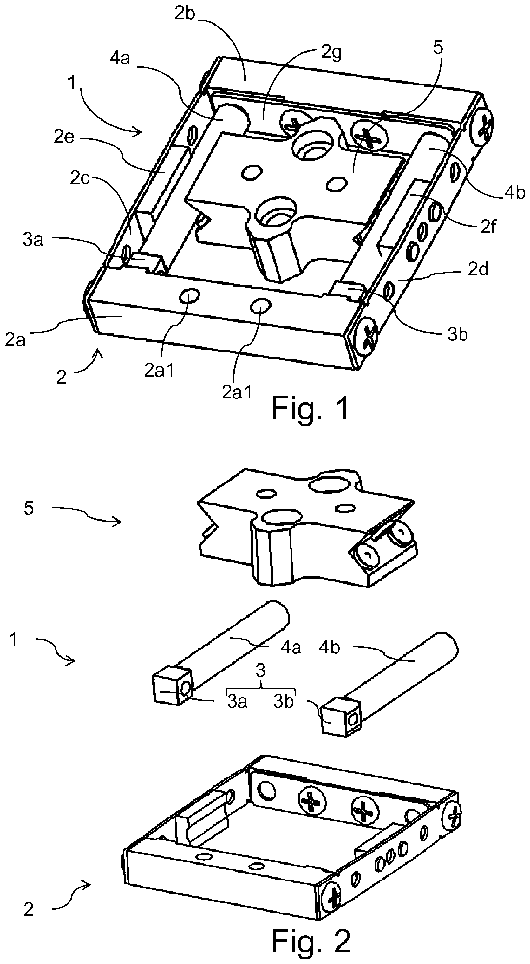

Die US 5,786,654 offenbart (u.a. in Fig. 1 und Spalte 4, Zeile 19 bis Spalte 5, Zeile) einen Linearantrieb nach dem Oberbegriff des Anspruchs 1, wobei ein erstes der beiden Führungselemente (16) der Erzeugung des Haftgleiteffekts dient (vgl. Spalte 4, Zeile 19 bis 31) und ein zweites der beiden Führungselemente (17) eine Verdrehsicherung bewerkstelligt (vgl. Spalte 4, Zeile 19 bis 31), um den Drehfreiheitsgrad des Bewegungselements um das erste Führungselement zu sperren (vgl. Spalte 4, Zeile 46 bis 54). Als Alternative zum zweiten Führungselement (17) kann eine Linearkugelführung (142, Fig. 23) bereitgestellt werden, so dass sich das Bewegungselement (12) nicht um das erste Führungselement (16) dreht, wenn es entlang desselben bewegt wird.

Linearantriebe gemäß der Präambel des unabhängigen Anspruchs 1 sind etwa aus KR 2009 0021990 A, DE 10 2012 104749 A1 oder US 2008/231970 A1 bekannt.

Unabhängig von der Art der Betätigung, elektromagnetisch oder piezoelektrisch, werden Präzisionsführungselemente wie Linearlager intensiv in Präzisions-Positioniertischen eingesetzt. Trotz der Vorteile der Bereitstellung einer hohen Steifigkeit mit konzentrischen oder parallelen Oberflächen, die über eine große Kontaktfläche passen, nehmen diese linearen Führungselemente den größten Platz ein, was die Miniaturisierung einer Vorrichtung begrenzt.

Der vorliegenden Erfindung liegt die Aufgabe zugrunde, einen gattungsgemäßen Linearantrieb mit kompaktem Aufbau und einer präziseren Verstellbarkeit des Bewegungselements bereitzustellen.

Zur Lösung dieser Aufgabe stellt die vorliegende Erfindung einen Linearantrieb bereit, umfassend: eine Aktoreinheit mit wenigstens einem Aktor; zwei Führungselemente und ein Bewegungselement, wobei das Bewegungselement durch eine von der Aktoreinheit erzeugte Bewegung aufgrund eines Haftgleiteffekts entlang beider Führungselemente verstellbar ist, wobei das Bewegungselement zur Verstellung entlang beider Führungselemente aufgrund des Haftgleiteffekts mit jedem der beiden Führungselemente mittels Haftreibung in Eingriff bringbar ist, mit einem Rahmen und einer federnden Lagerung nach Anspruch 1.

Dadurch werden beide Führungselemente zur Erzeugung des Vortriebs des Bewegungselements genutzt und die Gefahr eines Verkantens des Bewegungselements zwischen den beiden Führungselementen, die bei einem einseitigen Antrieb besteht, verringert. Somit kann das zur Verstellung des Bewegungselements erforderliche Spiel zwischen dem Bewegungselement und jedem der beiden Führungselemente vergleichsweise klein bemessen werden. Zudem kann das Bewegungselement mittels Haftreibung positionsgenau an beiden Führungselementen festgelegt werden.

Vorteilhafte Ausführungen der beanspruchten Erfindung sind Gegenstände der abhängigen Ansprüche.

Der Aktor ist beispielsweise ein elektromagnetischer oder piezoelektrischer Aktor. Vorzugsweise ist die von der Aktoreinheit erzeugte Bewegung eine elektrisch erzeugte Schwingung. Die Aktoreinheit kann einen oder mehrere Aktoren aufweisen, insbesondere Piezoaktoren, die als elektromechanische Wandler dienen und eine elektrische Wechselspannung in eine oszillierende Bewegung des Piezoaktors übertragen.

Es kann von Vorteil sein, wenn die Aktoreinheit ausgebildet ist, um beide Führungselemente simultan und/oder synchron und/oder entlang paralleler Bewegungsbahnen in Bewegung zu versetzen. Dadurch können die beiden Führungselemente das Bewegungselement zur Erzeugung des Vorschubs besonders gleichmäßig antreiben und somit äußert genau positionieren. Es ist auch möglich, dass die Aktoreinheit beide Führungselemente zumindest phasenweise simultan und/oder synchron und/oder entlang paralleler Bewegungsbahnen in Bewegung versetzen kann, und zumindest phasenweise asynchron und/oder entlang nicht-paralleler Bewegungsbahnen.

Es kann sich aber auch als hilfreich erweisen, wenn das Bewegungselement im spannungsfreien Zustand der Aktoreinheit (bzw. in Abwesenheit von Steuerspannungen bzw. der von der Aktoreinheit erzeugten Bewegung) mit jedem der beiden Führungselemente mittels Haftreibung in Eingriff steht. Dadurch kann bei Stillstand des Bewegungselements eine Relativbewegung zu jedem der beiden Führungselemente effektiv verhindert werden. Vor allem für die Anwendung des Linearantriebs in Präzisions-Positioniereinrichtungen ist diese Ausführung von besonderem Vorteil.

Es kann sich auch als nützlich erweisen, wenn jedes der beiden Führungselemente und/oder das Bewegungselement und/oder wenigstens ein Kontaktabschnitt des Bewegungselements aus einem nicht-magnetischen oder nicht-magnetisierbaren Material, vorzugsweise Keramik, bevorzugt Oxidkeramik, besonders bevorzugt Aluminiumoxid, ausgebildet ist/sind. Es gibt Anwendungen, bei denen ein Linearantrieb oder zumindest dessen Bewegungselement nichtmagnetisch sein muss. Sofern die Führungselemente aus nichtmagnetischen Materialien wie Strukturkeramik oder Titan hergestellt werden, ist der Linearantrieb allerdings auch für Spezialanwendungen, die einen nicht-magnetischen oder nicht-magnetisierbaren Linearantrieb erfordern, einsetzbar. Zudem kann in dieser Ausführung eine große Haftreibungskraft zwischen den Führungselementen und dem Bewegungselement erzeugt werden.

Es kann sich als praktisch erweisen, wenn die Aktoreinheit zwei Aktoren aufweist, die jeweils eines der beiden Führungselemente antreiben. Vorzugsweise ist jedes Führungselement gelenkig oder fest mit der Aktoreinheit verbunden. Die beiden Aktoren können identisch ausgebildet und parallel verschaltet sein, um die Führungselemente synchron zueinander anzutreiben und einen gleichmäßigen Vorschub des Bewegungselements zu erzeugen. Zudem sind gegenüber einem einzelnen Aktor unterschiedliche Bewegungsmuster des Bewegungselements darstellbar. Vorzugsweise können die beiden Aktoren unabhängig voneinander gesteuert werden. Dadurch ist auch eine besonders präzise Feineinstellung der Position des Bewegungselements möglich.

Es kann dabei auch von Vorteil sein, wenn die Aktoren jeweils an einem Ende der Führungselemente angeordnet sind und bezüglich einer Mittelebene, die senkrecht zur Bewegungsrichtung ist und die Führungselemente in Bewegungsrichtung halbiert, auf der gleichen Seite oder gegenüberliegenden Seiten angeordnet sind. Eine Anordnung der Aktoren auf der gleichen Seite der besagten Ebene erleichtert die Montage des Linearantriebs, kann aber in Abhängigkeit von der Position des Bewegungselements zu unterschiedlichen Antriebskräften führen. Dieser Unterschied kann eine positionsabhängige Schrittweite des Bewegungselements bewirken. Um dieses Problem zu lösen, empfiehlt es sich die Aktoren auf gegenüberliegenden Seite der besagten Ebene anzuordnen.

Es kann von Vorteil sein, wenn jedes Führungselement und/oder das Bewegungselement lediglich einen Translationsfreiheitsgrad aufweist/aufweisen, vorzugsweise alle in parallelen Richtungen. Bevorzugt sind die anderen beiden Translationsfreiheitsgrad sowie alle Rotationsfreiheitsgrade beider Führungselemente und/oder des Bewegungselements gesperrt. Dadurch können Positionsfehler bei der Verstellung des Bewegungselements entlang seines Stellwegs effektiv unterbunden werden. Überdies gestaltet sich die Bewegungssteuerung des Bewegungselements relativ einfach.

Es kann von Vorteil sein, wenn das Bewegungselement und die Führungselemente derart konfiguriert sind, dass in der Haftphase zwischen jedem Führungselement und dem Bewegungselement Kontaktkräfte in unterschiedlichen Richtungen und vorzugsweise symmetrisch zu einer Ebene erzeugt werden. Die Ebene schließt vorzugsweise die Erstreckungsachsen der Führungselemente ein. Dadurch kann das Bewegungselement besonders einfach in seiner bestimmungsgemäßen Mittellage und Ebene zwischen den beiden Führungselementen zentriert werden.

Es kann aber auch von Nutzen sein, wenn jedes Führungselement als Zylinder ausgebildet ist und sich die Bewegungsbahn des Führungselements vorzugsweise entlang der Zylinderachse erstreckt. In dieser Ausführung kann das Bewegungselement sowohl während eines Vorschubs entlang des Stellwegs als auch im Stillstand besonders lagesicher positioniert werden. Zusätzlich ist ein Linearlager normalerweise das teuerste Teil in einer Präzisionsstufe und kann in dieser erfindungsgemäßen Ausführung des Linearantriebs entfallen.

Es kann auch sinnvoll sein, wenn das Bewegungselement jedes Führungselement in einer eigenen rinnenförmigen Aufnahme aufnimmt, wobei die rinnenförmige Aufnahme vorzugsweise als V-förmige Nut ausgebildet ist, die sich entlang des jeweiligen Führungselements erstreckt und sich zu diesem hin öffnet. Dadurch kann das Bewegungselement statisch bestimmt und stabil an jedem der Führungselemente festgelegt werden und es können große Haftreibungskräfte übertragen werden.

Erfindungsgemäß weist der Linearantrieb einen in sich geschlossenen Rahmen auf, der die Aktoreinheit, die beiden Führungselemente und das Bewegungselement umgibt, wobei der Rahmen bevorzugt einen quaderförmigen Umriss aufweist. In einer vorteilhaften Variante umfasst der Rahmen vier Teile, die näherungsweise ein Rechteck bilden, insbesondere ein Basisteil, ein Gegenstück und zwei Seitenteile, welche das Basisteil und das Gegenstück verbinden. Das Basisteil und das Gegenstück sind beispielsweise quaderförmig ausgebildet. Die beiden Seitenteile können blattfederförmig oder plattenförmig ausgebildet sein. Es kann von Vorteil sein, wenn die Aktoreinheit zwei Aktoren aufweist und der erste Aktor fest an den Rahmen bzw. das Basisteil gekoppelt ist, während der zweite Aktor fest oder beweglich an den Rahmen bzw. das Basisteil gekoppelt ist.

Erfindungsgemäß ist jedes Führungselement federnd gegenüber dem Rahmen des Linearantriebs quer zu seiner Erstreckungsrichtung gelagert, bevorzugt über wenigstens eine Blattfeder. Dadurch kann der Kontaktdruck zwischen dem Bewegungselement und dem Führungselement gezielt eingestellt werden. Vorzugsweise ist jedes Führungselement entgegen dessen Bewegungsrichtung federnd am Gegenstück des Rahmens gelagert, sodass die Auslenkung des Führungselements in seiner Bewegungsrichtung zu einer Vergrößerung der Federspannung führt.

In einer vorteilhaften Ausführungsform ist jedes Führungselement über ein Gleitlager gleitend am Rahmen gelagert. Das Gleitlager kann das Führungselement beispielsweise gleitend zwischen seinen endseitigen Lagerstellen unterstützen, um eine Biegung des Führungselements zu unterbinden. Das Gleitlager befindet sich vorzugsweise auf einer von dem Bewegungselement abgewandten Seite des Führungselements.

Erfindungsgemäß ist weiters jedes Führungselement federnd in Richtung des Bewegungselements und bevorzugt auchin Richtung der Aktoreinheit vorgespannt. Dadurch wird der Kontaktdruck zwischen dem Führungselement und dem Bewegungselement bzw. zwischen dem Führungselement und der Aktoreinheit erhöht. So können das Schwingungsverhalten des Führungselements bzw. die Haftreibung zwischen Bewegungselement und Führungselement gezielt eingestellt werden. Vorzugsweise wird die Federkraft durch eine Blattfeder und ggf. ein Gleitlager auf das Führungselement aufgebracht.

Es kann außerdem sinnvoll sein, wenn ein Federelement am Bewegungselement befestigt ist und jedes Führungselement in einer rinnenförmigen Aufnahme aufgenommen ist, die durch einen Abschnitt des Bewegungselements und einen Abschnitt des Federelements gebildet ist. Durch gezielte Wahl des Materials, der Abmessungen und/oder der Befestigungspunkte des Federelements kann der Kontaktdruck zwischen dem jeweiligen Führungselement und dem Bewegungselement bzw. dem Federelement eingestellt werden, wodurch die Haft- und Gleitbedingungen unmittelbar beeinflusst werden können.

Es kann auch von Vorteil sein, wenn jedes Führungselement einen peripheren Abschnitt aufweist, der mit einem Widerstandsmaterial versehen ist, und das Federelement Gleitabschnitte aufweist, die jeweils mit dem peripheren Abschnitt des entsprechenden Führungselements in elektrisch leitendem Kontakt stehen. Auf diese Weise kann der Linearantrieb die Funktion eines Potentiometers bereitstellen, mit dem die Position des Bewegungselements bestimmt werden kann, indem der elektrische Widerstand zwischen einem Punkt des peripheren Abschnitts des einen Führungselements und einem Punkt des peripheren Abschnitts des anderen Führungselements erfasst wird.

Es kann sinnvoll sein, wenn der Rahmen und/oder das Bewegungselement eine mechanische Schnittstelle aufweist/aufweisen, die mit der mechanischen Schnittstelle eines identischen Linearantriebs koppelbar ist/sind, sodass die Stellwege der aneinander gekoppelten Linearantriebe in zueinander senkrecht stehenden Ebenen verlaufen. So kann aus identischen Linearantrieben eine mehrachsig verstellbare Anordnung modular aufgebaut werden.

Ein weiterer Aspekt der vorliegenden Erfindung betrifft eine Anordnung, umfassend zwei oder drei Linearantriebe nach einer der vorangehenden Ausführungen, wobei die Linearantriebe derart aneinander gekoppelt sind, dass die Stellwege der aneinander gekoppelten Linearantriebe in zwei bzw. drei zueinander senkrecht stehenden Ebenen verlaufen. Die Kopplung der Linearantriebe wird vorzugsweise über die mechanischen Schnittstellen gemäß der vorangehenden Ausführung bewerkstelligt.

Ein zusätzlicher Aspekt der Erfindung betrifft eine Methode zur Bestimmung der Position des Bewegungselements, wobei ein Widerstand von einem Punkt des peripheren Abschnitts eines Führungselements zu einem Punkt des peripheren Abschnitts des anderen Führungselements erfasst wird. Mit Bestimmung der Position des Bewegungselements kann das Bewegungselement zielgerichtet verfahren werden.

Weitere bevorzugte Weiterbildungen ergeben sich durch Kombinationen der in den Ansprüchen, den Zeichnungen und der Beschreibung offenbarten Merkmale.

### Begriffe und Definitionen

### Linearantrieb

Der Begriff Linearantrieb bezeichnet ein Antriebssystem, das zu einer translatorischen Bewegung führt. Die Bewegung des Linearantriebs kann entlang eines Stellwegs in gerader Linie oder einem anderen vorgegebenen Verlauf erfolgen.

### Haftgleiteffekt

Der Haftgleiteffekt, oder auch der Stick-Slip-Effekt (von engl. stick "haften" und slip "gleiten"), bezeichnet das Ruckgleiten von gegeneinander bewegten Festkörpern und ist unter anderem aus der US 5,786,654 bekannt. Erfindungsgemäß umfasst die Verstellung des Bewegungselements entlang der Führungselemente mittels Haftgleiteffekt eine Haftphase, in welcher das Bewegungselement mit beiden Führungselementen mittels Haftreibung in Eingriff steht, und eine Gleitphase, in welcher sich das Bewegungselement relativ zu wenigstens einem Führungselement bewegt.

### Aktor bzw. Piezoaktor

Der Begriff Aktor bezeichnet ein Antriebselement, das elektrische Signale in mechanische Bewegung umsetzt. Der Aktor ist beispielsweise ein Piezoaktor.

### Kurze Beschreibung der Figuren

Es zeigen:
Fig. 1 eine perspektivische Ansicht einer erfindungsgemäßen Ausführungsform des Linearantriebs.
Figur 2 eine perspektivische Explosionsdarstellung des Linearantriebs gemäß Figur 1.
Figur 3 in Ansicht (a) eine Draufsicht auf den Linearantrieb gemäß Figur 1 und in Ansicht (b) einen Schnitt entlang der Linie IIIb-IIIb aus Figur 3 (a).
Figur 4 eine perspektivische Ansicht des Bewegungselements des Linearantriebs gemäß Figur 1.
Figur 5 verschiedene Ansichten des Bewegungselements des Linearantriebs gemäß Figur 1, und insbesondere in Ansicht (a) eine schematische Seitenansicht mit Blickrichtung in der bestimmungsgemäßen Bewegungsrichtung des Bewegungselements, in Ansicht (b) eine Seitenansicht mit Blickrichtung senkrecht zur bestimmungsgemäßen Bewegungsrichtung des Bewegungselements und in Ansicht (c) eine Draufsicht mit Blickrichtung senkrecht zur bestimmungsgemäßen Bewegungsrichtung des Bewegungselements.
Figur 6 eine perspektivische Ansicht einer erfindungsgemäßen Anordnung A, umfassend zwei Linearantriebe gemäß Figur 1, deren Bewegungselemente derart aneinander gekoppelt sind, dass die Linearantriebe Bewegungen in zwei senkrecht zueinander stehenden Ebenen erzeugen.
Figur 7 eine perspektivische Ansicht einer erfindungsgemäßen Anordnung B, umfassend die Anordnung A gemäß Figur 6 sowie einen weiteren Linearantrieb gemäß Figur 1, dessen Rahmen derart an den Rahmen eines Linearantriebs der Anordnung A gekoppelt ist, dass die drei Linearantriebe der Anordnung B Bewegungen in insgesamt drei senkrecht zueinander stehenden Ebenen erzeugen.
Fig. 8 eine perspektivische Ansicht einer zweiten Ausführungsform des erfindungsgemäßen Linearantriebs.
Figur 9 in Ansicht (a) eine Draufsicht auf den Linearantrieb gemäß Figur 8 und in Ansicht (b) einen Schnitt entlang der Linie IXb-IXb aus Figur 9 (a).
Figur 10 eine perspektivische Explosionsdarstellung des Linearantriebs gemäß Figur 8.
Figur 11 in Ansicht (a) eine Draufsicht auf einen Linearantrieb gemäß einer dritten Ausführungsform und in Ansicht (b) einen Schnitt entlang der Linie Xlb-Xlb aus Figur 11(a).
Figur 12 eine Schnittansicht des Linearantriebs gemäß Figur 11(a).
Figur 13 zeigt in Ansicht (a) schematisch eine Potentiometer-Funktion des Linearantriebs gemäß der dritten Ausführungsform zur Positionsbestimmung des Bewegungselements und in Ansicht (b) beispielhafte Zahlenwerte, die die Potentiometer-Funktion verdeutlichen.

### Detaillierte Beschreibung des bevorzugten Ausführungsbeispiels

Der erfindungsgemäße Linearantrieb 1 nach dem bevorzugten Ausführungsbeispiel der Erfindung umfasst eine Aktoreinheit, bestehend aus einem Paar piezoelektrischer Mehrschichtaktuatoren 3a, 3b mit jeweils einem daran befestigten Führungselement 4a, 4b in Gestalt einer zylindrischen Stange 4a, 4b aus Strukturkeramik, die in einem Rahmen 2 parallel angeordnet sind.

Der Rahmen 2 ist aufgebaut aus einem quaderförmigen Basisteil 2a und einem näherungsweise gleichgroßen, quaderförmigen Gegenstück 2b. Das Basisteil 2a und das Gegenstück 2b sind über zwei plattenförmige Seitenteile 2c und 2d zu einem näherungsweise rechteckigen, umlaufenden Rahmen 2 mit einem im Wesentlichen quaderförmigen Umriss verbunden, wie beispielsweise in Figur 2 zu erkennen ist.

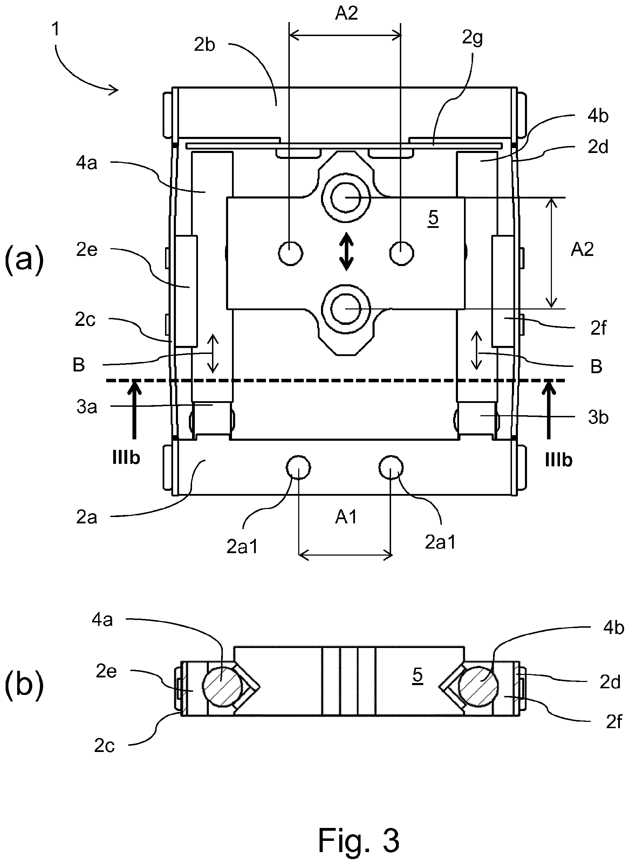

Das Basisteil 2a umfasst auf einer in Figur 3 (a) sichtbaren Oberseite sowie vorzugsweise auch an einer vom Gegenstück 2b abweisenden Seitenfläche jeweils zwei als Schraubenöffnungen ausgebildete Eingriffsabschnitte 2a1 mit vorgegebenem Abstand A1. Die Schraubenöffnungen 2a1 fungieren als standardisierte Schnittstelle, um den Linearantrieb 1 mit einem weiteren identischen Linearantrieb 1 mechanisch zu koppeln, sodass die beiden Linearantriebe 1 Bewegungen in zwei senkrecht zueinander stehenden Ebenen ausführen (X; Y). Der Rahmen 2 und seine Bestandteile werden vorzugsweise aus Kunststoff und/oder Metall und/oder Keramik hergestellt.

Von zwei Seiten des Rahmens 2 wird durch die als Blattfedern ausgebildeten Seitenteile 2c, 2d über Gleitlagerschalen 2e, 2f eine Druckkraft auf die Führungselemente 4a, 4b und mittelbar auf das zwischen den zwei Führungselementen 4a, 4b angeordnete Bewegungselement 5 ausgeübt. Die Gleitlagerschalen 2e, 2f sind rinnenförmig ausgebildet und weisen jeweils eine zur zylindrischen Mantelfläche des jeweiligen Führungselements 4a, 4b komplementäre, konkave Innenkontur auf. Die Gleitlagerschalen 2e, 2f stützen die Führungselemente 4a, 4b senkrecht zu deren Erstreckungs- und Bewegungsrichtung ab und lassen eine Gleitbewegung der Führungselemente 4a, 4b in deren Erstreckungs- und Bewegungsrichtung zu. Dadurch wird eine Biegung der Führungselemente 4a, 4b quer zu deren Erstreckungs- und Bewegungsrichtung bedingt durch die Spreizkraft des zwischenliegenden Bewegungselements 5 verringert oder vermieden und ein Kontaktdruck zwischen dem Bewegungselement 5 und jedem der Führungselemente 4a, 4b erhöht.

Das Gegenstück 2b weist vorzugsweise ebenfalls Eingriffsabschnitte (2a1) zur Kopplung mit einem identischen Linearantrieb 1 entsprechend zum Basisteil 2a auf. An der zum Basisteil 2a weisenden Seite umfasst das Gegenstück 2b mittig einen im Wesentlichen quaderförmigen Vorsprung, an dem eine sich in einer Ebene erstreckende Blattfeder 2g befestigt ist. Die beiden in der Erstreckungsrichtung voneinander abgewandten Enden der Blattfeder 2g verlaufen hierbei im Abstand parallel zu der zum Basisteil 2a weisenden Seite des Gegenstücks 2b und dienen als federnde Lagerabschnitte für die axialen Enden der beiden Führungselemente 4a, 4b.

Die beiden Antriebseinheiten des piezoelektrischen Linearantriebs 1 sind identisch aufgebaut und bestehen jeweils aus einem piezoelektrischen Aktor 3a, 3b und einem damit gekoppelten Führungselement 4a, 4b. Der piezoelektrische Aktor 3a, 3b ist schichtweise aufgebaut und näherungsweise würfelförmig ausgebildet. Das Führungselement 4a, 4b hat eine zylindrische Form mit einem Durchmesser, der im Wesentlichen der Kantenlänge des würfelförmigen Aktors 3a, 3b entspricht. Durch Anlegen einer elektrischen Wechselspannung an den piezoelektrischen Aktor 3a, 3b verformt sich dieser derart, dass das damit gekoppelte Führungselement 4a, 4b eine Oszillierbewegung entlang seiner Erstreckungsachse ausführt. Die beiden Führungselemente 4a, 4b sind exakt parallel zueinander ausgerichtet und werden durch die zugeordneten Aktoren 3a, 3b synchron zueinander in Bewegung versetzt. Die von den Aktoren 3a, 3b abweisenden Endflächen der Führungselemente 4a, 4b sind jeweils durch die Blattfeder 2g federnd an dem Gegenstück 2b des Rahmens 2 gelagert und werden von der Blattfeder 2g in Richtung des jeweiligen Aktors 3a, 3b gedrückt.

Im Montagezustand gemäß Figur 1 ist das von dem Führungselement 4a abweisende Ende des Aktors 3a fest mit dem Basisteil 2a des Rahmens 2 verbunden. Im Gegensatz dazu kann das von dem Führungselement 4b abweisende Ende des Aktors 3b entlang des Basisteils 2a des Rahmens 2 beweglich an diesem gelagert sein. Durch gleitende oder gelenkige Lagerung eines Aktors 3b am Basisteil 2a des Rahmens 2 kann eine Klemmung durch Verkanten des Bewegungselements 5 zwischen den beiden Führungselementen 4a, 4b verhindert werden.

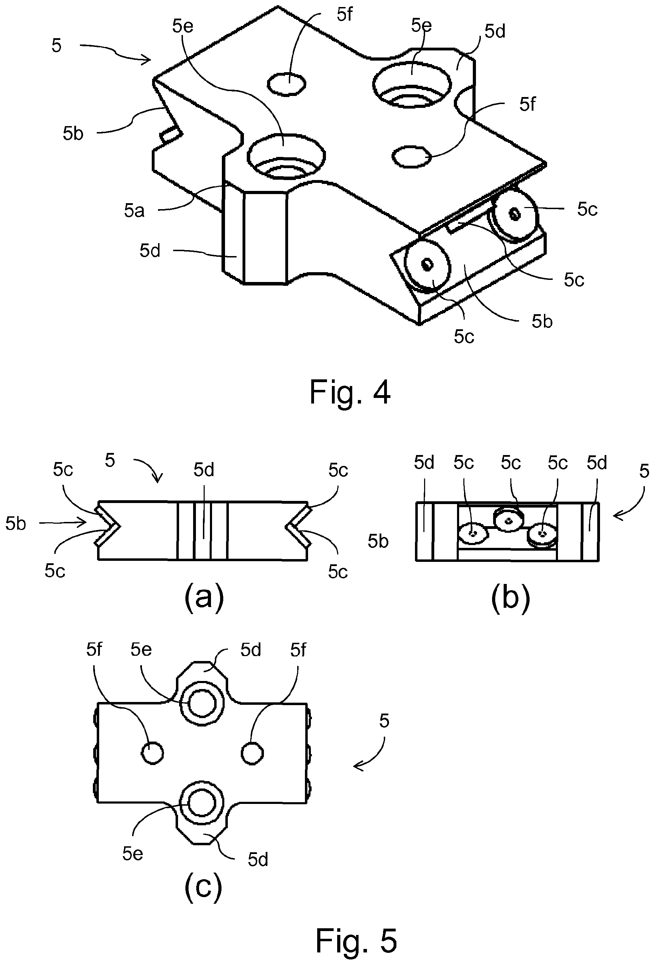

Im vorliegenden Ausführungsbeispiel ist das Bewegungselement 5 näherungsweise quaderförmig ausgebildet. Es umfasst an den beiden kleinsten Seitenflächen keilförmige Aufnahmen 5b in Gestalt von sich entlang des jeweiligen Führungselements 4a, 4b erstreckenden, rinnenförmigen V-Nuten, die wie in Figur 3 (b) anschaulich dargestellt, ausgebildet sind, um das jeweilige Führungselement 4a, 4b darin aufzunehmen und im Haftgleiteffekt daran geführt zu werden. An den beiden einander zugewandten Innenflächen der keilförmigen Aufnahme 5b befinden sich jeweils drei kreisringförmige Kontaktabschnitte 5c in Form von Reibkupplungen 5c aus Strukturkeramik, die als Friktionselemente dienen und im Haftgleiteffekt an der zugeordneten Kontaktfläche des jeweiligen Führungselements 4a, 4b abwechselnd gleiten und haften. Wie in Figur 5 (c) anschaulich dargestellt ist, wird die Quaderform des Bewegungselements 5 durch zwei Vorsprünge 5d unterbrochen, die sich an entgegengesetzten Seiten des Bewegungselements 5 entlang der bestimmungsgemäßen Bewegungsrichtung des Bewegungselements 5 erstrecken. Zwischen der in Figur 5 (c) sichtbaren Oberseite und der davon abgewandten Unterseite des Bewegungselements 5 erstrecken sich Durchgangsbohrungen bzw. Schraubenöffnungen, die als Eingriffsabschnitte 5e, 5f zur Kopplung des Linearantriebs 1 mit einem weiteren identischen Linearantrieb 1 ausgebildet sind. Die Durchmesser und Abstände dieser Eingriffsabschnitte 5e bzw. 5f sind identisch zueinander, allerdings um 90° zueinander versetzt. Über diese Eingriffsabschnitte 5e, 5f können zwei identische Linearantriebe 1 derart miteinander gekoppelt werden, dass deren Stellwege entlang zweier Achsen (X, Y; vgl. Fig. 5) in zwei senkrecht zueinander angeordneten Ebenen verlaufen.

Zur Verstellung des Bewegungselements 5 entlang des Stellwegs zwischen Basisteil 2a und Gegenstück 2b wird eine elektrische Wechselspannung an die Aktoreinheit 3 angelegt, sodass beide Führungselemente 4a, 4b synchron und parallel zueinander in Bewegung versetzt werden. Die Beschleunigung der beiden Führungselemente 4a, 4b ist in der Haftphase hinreichend klein, sodass der Hafteingriff zwischen dem Bewegungselement 5 und jedem der beiden Führungselemente 4a, 4b erhalten bleibt und das Bewegungselement 5 der Bewegung der Führungselemente 4a, 4b folgt. Folglich erfährt das Bewegungselement 5 einen Vorschub entlang eines Stellwegs. Durch Wechsel der an den Aktoren 3a, 3b angelegten Steuerspannung kann die Bewegungsrichtung der Führungselemente 4a, 4b schlagartig umgedreht werden, sodass sich das Bewegungselement 5 in einer Gleitphase gleitend entlang der beiden Führungselemente 4a, 4b bewegt. In der Gleitphase ist die Trägheitskraft des Bewegungselements 5 größer als die Haftreibungskraft zwischen dem Bewegungselement 5 und den beiden Führungselementen 4a, 4b.

Die Eingriffsstruktur zwischen dem Bewegungselement 5 und den beiden Führungselementen 4a, 4b ersetzt dabei eine gesonderte Führungseinrichtung, da sowohl die Führungselemente 4a, 4b als auch das Bewegungselement 5 lediglich einen Translationsfreiheitsgrad aufweisen, während die anderen beiden Translationsfreiheitsgrade sowie alle Rotationsfreiheitsgrade beider Führungselemente 4a, 4b und des Bewegungselements 5 gesperrt sind.

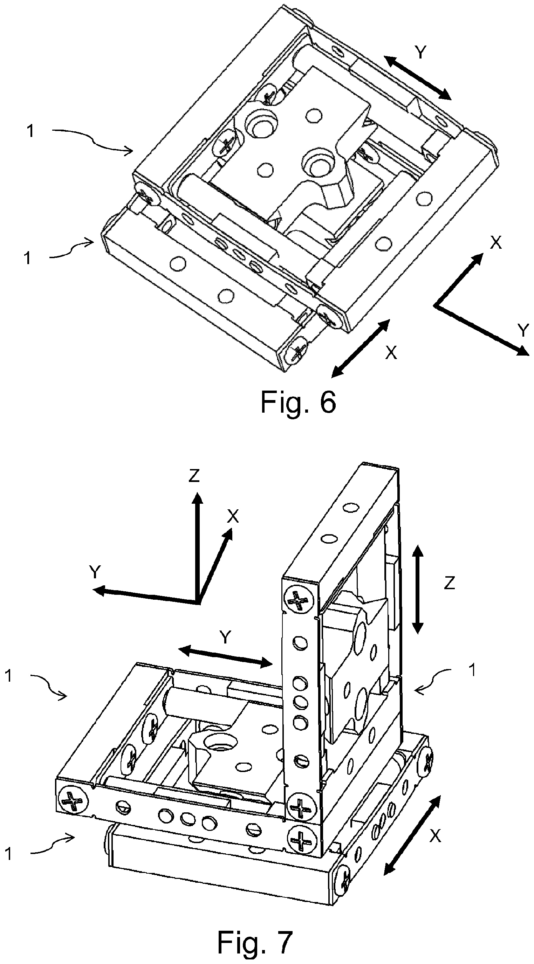

Der Linearantrieb 1 arbeitet nach dem Trägheitsantriebsprinzip. Um Bewegungen mit mehreren Freiheitsgraden (DoF) zu erhalten, können mehrere Linearantriebe 1 übereinander angebracht werden, wie in den Figuren 6 und 7 anschaulich dargestellt ist.

In der Anordnung A gemäß Figur 6 sind zwei erfindungsgemäße Linearantriebe 1 über jeweilige Eingriffsabschnitte (5e, 5f) der Bewegungselemente 5 derart aneinander gekoppelt, dass die Stellwege der beiden Linearantriebe 1 (unter Vernachlässigung der Dicke der Lineartriebe 1) entlang zweier Achsen X, Y in zwei senkrecht zueinander angeordneten Ebenen verlaufen.

In der Anordnung B gemäß Figur 7, die auf der Anordnung A gemäß Figur 6 basiert, ist ein weiterer erfindungsgemäßer Linearantrieb 1 mit seinem Basisteil (2a) an das Basisteil (2a) eines Linearantriebs 1 der Anordnung A gekoppelt, sodass die insgesamt drei Linearantriebe 1 (unter Vernachlässigung der Dicke der Lineartriebe 1) entlang dreier Achsen X, Y, Z in drei senkrecht zueinander angeordneten Ebenen verlaufen.

Mit dem erfindungsgemäßen Linearantrieb 1 können mehrachsig verstellbare Präzisions-Positioniereinrichtungen besonders einfach und kostengünstig hergestellt werden.

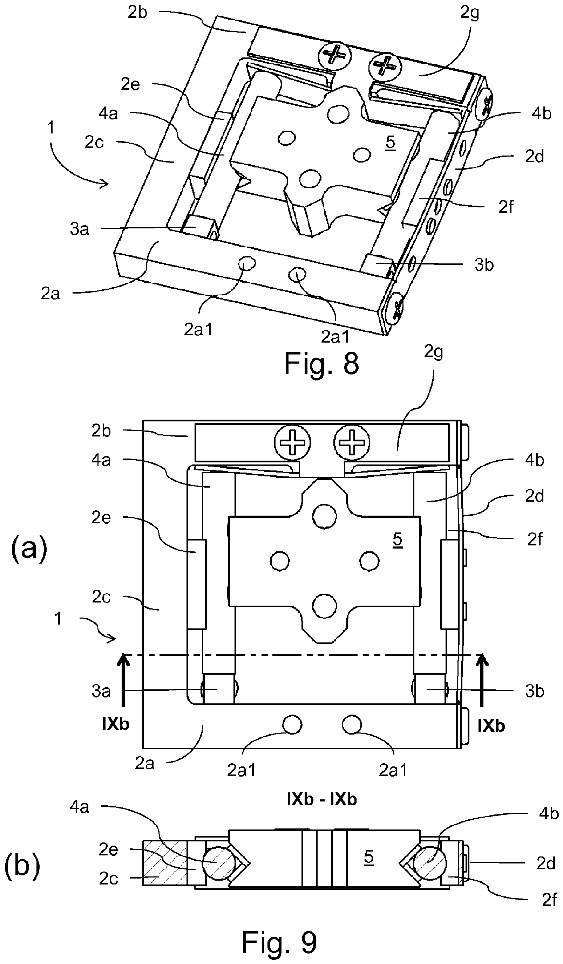

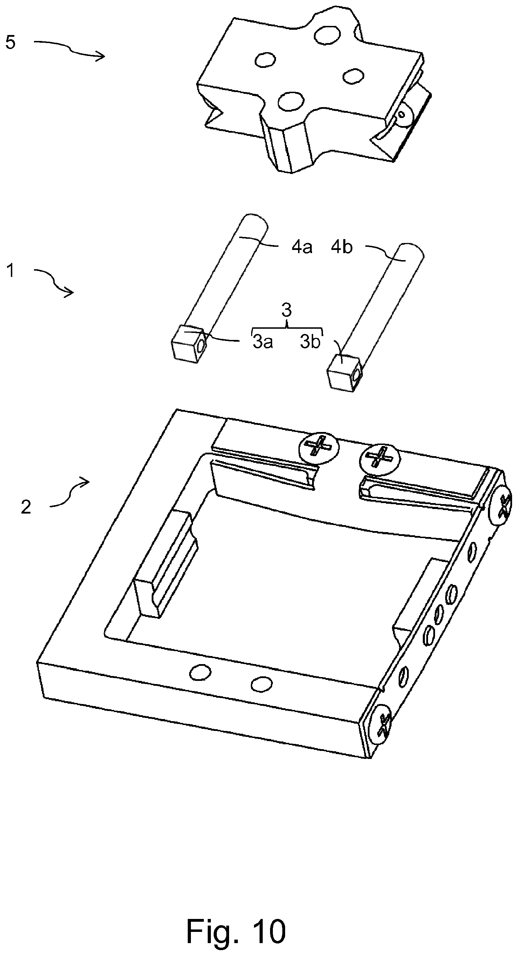

In der zweiten Ausführungsform des erfindungsgemäßen Linearantriebs 1, die nachstehend mit Bezug auf die Figuren 8 bis_10 beschrieben wird, sind die Rahmenteile 2a, 2b und 2c abweichend von der ersten Ausführungsform einteilig ausgeführt und bilden ein C-förmiges Rahmenelement, das mit dem streifen- bzw. plattenförmigen Seitenteil 2d zu einem Rechteck oder Quadrat verbunden wird. Dabei ist das C-förmiges Rahmenelement 2a, 2b und 2c im Wesentlichen starr und unnachgiebig ausgebildet, während die Vorspannung auf die Führungselemente 4a, 4b und das dazwischen angeordnete Bewegungselement 5 durch das mit dem C-förmigen Rahmenteil 2a, 2b und 2c verschraubte Seitenteil 2d aufgebracht wird, wobei das Seitenteil 2d als Blattfeder wirkt.

Ebenfalls abweichend von der ersten Ausführungsform ist die Blattfeder 2g zur axialen Vorspannung der Führungselemente 4a, 4b in deren Erstreckungsrichtung als H-förmiges Federelement ausgebildet, dessen beide langen Schenkel sich in um 90° voneinander versetzten Ebenen erstrecken, wobei der mittig zwischen den langen Schenkeln liegende kurze Schenkel um 90° geknickt ist. Dabei ist ein langer Schenkel des H-förmigen Federelements an der Oberseite des Rahmenteils 2b über entsprechend dafür vorgesehene Eingriffsabschnitte bzw. Schraubenöffnungen mit Schraubenbolzen angeschraubt, während sich der die Führungselemente 4a, 4b vorspannende Teil der Blattfeder 2g parallel zu der den Aktoren 3a, 3b zugewandten Innenseite des Rahmenteils 2b erstreckt.

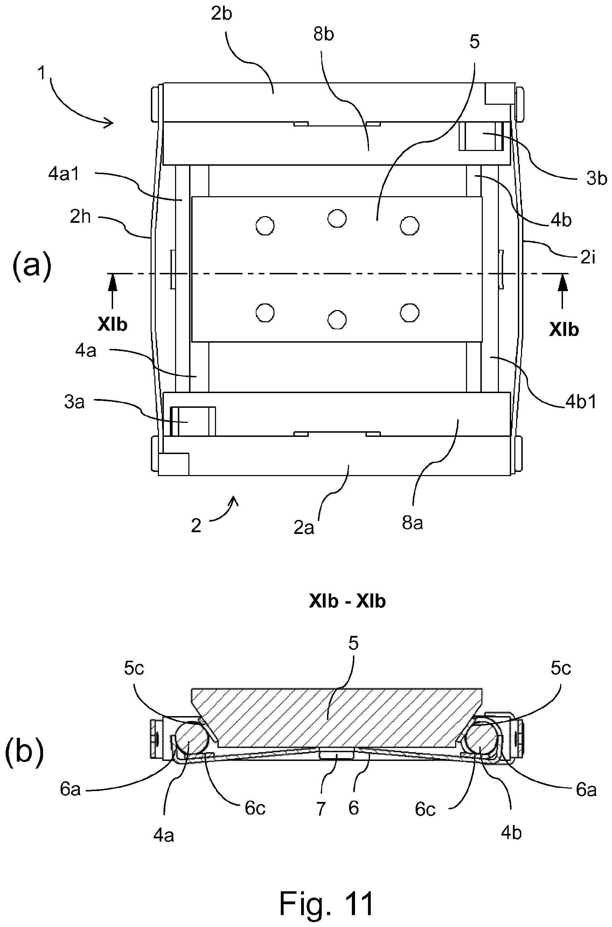

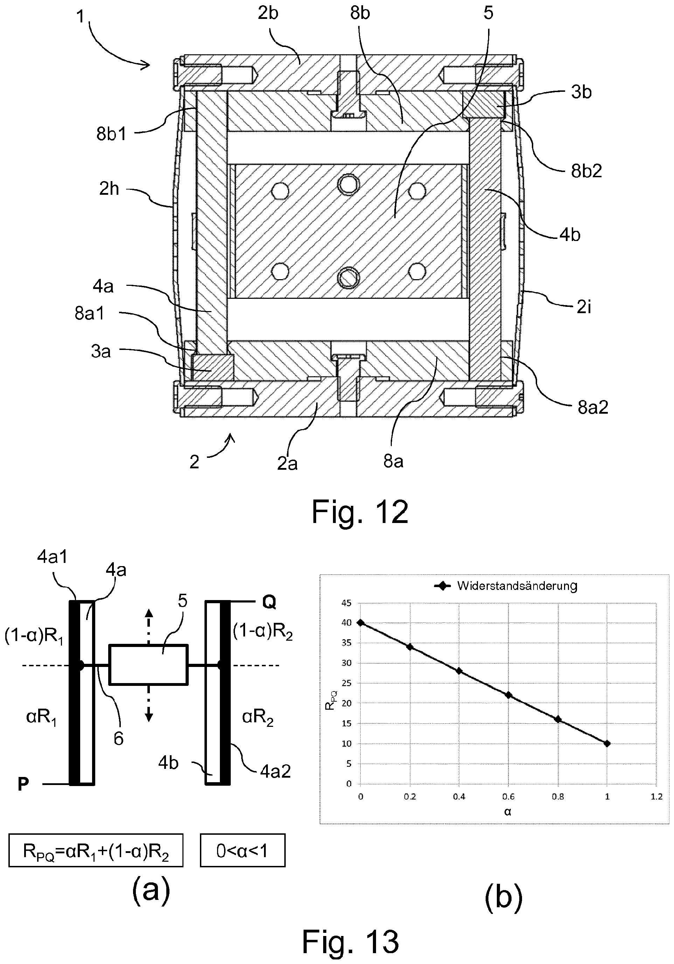

Eine dritte Ausführungsform des erfindungsgemäßen Linearantriebs 1 ist in den Figuren 11 und 12 dargestellt. Ähnlich zur ersten Ausführungsform ist der Rahmen 2 aus einem quaderförmigen Basisteil 2a und einem gleichartigen, vorzugsweise identischen, Gegenstück 2b aufgebaut. Das Basisteil 2a und das Gegenstück 2b sind über zwei Blattfedern 2h, 2i verbunden, welche vorzugsweise durch Schraubverbindungen am Basisteil 2a und am Gegenstück 2b befestigt sind. Ein Aufnahmeelement 8a, 8b, das näherungsweise die gleichen Dimensionen wie das Basisteil 2a bzw. das Gegenstück 2b aufweist, ist jeweils am Basisteil 2a und am Gegenstück 2b befestigt, sodass sich beide Aufnahmeelemente 8a, 8b innerhalb des Rahmens 2 gegenüberliegen. Die Befestigung am Basisteil 2a bzw. am Gegenstück erfolgt dabei vorzugsweise über eine Schraubverbindung. Die, vorzugsweise identischen Aufnahmeelemente 8a, 8b bestehen aus elektrisch nichtleitendem, vorzugsweise polymerbasierten Material und verfügen über jeweils zwei Durchgangslöcher 8a1, 8a2, 8b1, 8b2, in denen die Führungselemente 4a, 4b aufgenommen sind und die diesen als Gleitlager dienen.

Ein Durchgangsloch 8a1, 8b2 eines jeden Aufnahmeelements 8a, 8b ist dabei so gestaltet, dass zusätzlich der am jeweiligen Führungselement 4a, 4b befestigte Aktor 3a, 3b darin aufgenommen werden kann, wobei eine dem jeweiligen Führungselement 4a, 4b abgewandte Endfläche des Aktors 3a, 3b mit dem Basisteil 2a bzw. dem Gegenstück 2b in Kontakt steht. In dieser Ausführungsform ist ein Aktor 3a in einem Durchgangsloch 8a1 des Aufnahmeelements 8a aufgenommen, das mit dem Basisteil 2a verbunden ist, und der andere Aktor 3b ist in einem Durchgangsloch 8b2 des Aufnahmeelements 8b aufgenommen, das mit dem Gegenstück 2b verbunden ist. Folglich liegen sich die Aktoren 3a, 3b bezüglich des Rahmens 2 diagonal gegenüber.

Aufgrund der Blattfedern 2h, 2i, die das Basisteil 2a und das Gegenstück 2b miteinander verbinden, werden die Führungselemente 4a, 4b gegen ihre zugehörigen Aktoren 3a, 3b gedrückt.

Das Bewegungselement 5 ist vorzugsweise über eine Schraubverbindung 7 mit einem Federelement 6 in Form einer Blattfeder versehen. Das Federelement 6 erstreckt sich senkrecht zur Bewegungsrichtung und ragt dabei so über die parallel zur Bewegungsrichtung angeordneten Seitenflächen des Bewegungselements 5 hinaus, dass jedes Führungselement 4a, 4b in einer rinnenförmigen Aufnahme, welche durch eine Seitenfläche des Bewegungselements 5 und einen Abschnitt des Federelements 6, der über das Bewegungselement 5 hinausragt, aufgenommen ist. Insbesondere sind dabei die Seitenflächen des Bewegungselements 5 schräg zu den Hauptflächen des Bewegungselements 5 ausgebildet und mit einem oder mehreren Kontaktabschnitten 5c versehen. Gleichermaßen sind die entsprechenden Abschnitte des Federelements jeweils mit einem Kontaktabschnitt 6c versehen, sodass jedes Führungselement 4a, 4b unmittelbar über die Kontaktabschnitte 5c, 6c, die als Friktionselemente dienen, kontaktiert wird. Durch die Wahl verschiedener Materialien, Abmessungen und/oder Befestigungspunkte des Federelements 6 kann der Kontaktdruck auf die Führungselemente 4a, 4b variiert werden.

Weiterhin ist in dieser Ausführungsform ein peripherer Abschnitt 4a1, 4b1 jedes Führungselements 4a, 4b mit einem Widerstandsmaterial versehen. Das Federelement 6 des Bewegungselements 5 weist an seinen äußeren Enden Gleitabschnitte 6a auf, die mit den peripheren Abschnitten 4a1, 4b1 der Führungselemente 4a, 4b in elektrisch leitendem Kontakt stehen. Das Federelement 6 selbst ist ebenfalls elektrisch leitend ausgebildet. Auf diese Weise kann ein Potentiometer realisiert werden, mit dem sich die Position des Bewegungselements 5 bestimmen lässt, wie in Figur 13 beispielhaft veranschaulicht wird. Insbesondere weisen die peripheren Abschnitte 4a1, 4b1 der Führungselemente 4a, 4b dazu unterschiedliche Widerstandswerte R1, R2 auf. Aufgrund der unterschiedlichen Widerstandswerte R1, R2 ändert sich der Widerstand R_{PQ} von einem Punkt P des peripheren Abschnitts 4a1 des Führungselements 4a zu einem Punkt Q des peripheren Abschnitts 4b1 des anderen Führungselements 4b mit der Position des Bewegungselements 5.

Figur 13(a) zeigt schematisch die bevorzugte Ausgestaltung des Potentiometers, mit dem die Position des Bewegungselements 5 bestimmt werden kann. Zur Bestimmung dieser Position gilt es den elektrischen Widerstand R_{PQ} zwischen den Punkten P und Q zu erfassen, die sich auf gegenüberliegenden Seiten einer Ebene befinden, welche durch das Bewegungselement 5 und senkrecht zur Bewegungsrichtung verläuft. Die Position des Bewegungselements 5 wird als normalisierte Position α angegeben, welche Werte zwischen 0 und 1 annehmen kann und sich mit der Position des Bewegungselements 5 ändert. Der Wert 0 entspricht dabei vorzugsweise einer vorderen Endposition des Bewegungselements 5, in der sich das Bewegungselement 5 in Kontakt mit dem Aufnahmeelement 8a befindet und der Wert 1 einer hinteren Endposition, in der sich das Bewegungselement 5 in Kontakt mit dem Aufnahmeelement 8b befindet.

In dieser Konfiguration berechnet sich der Widerstand R_{PQ} nach folgender Formel: R_{PQ} = αR₁ + (1 - αR₂).

Figur 13(b) zeigt beispielhaft die Widerstandwerte R_{PQ} in Abhängigkeit von der normalisierten Position α des Bewegungselements 5 unter der Annahme, dass R1 10kΩ und R2 40kΩ beträgt. Über die Erfassung des Widerstandswert R_{PQ} kann folglich die Position des Bewegungselementes 5 berechnet werden.

Die erfindungsgemäßen Linearantriebe 1 gemäß der zweiten und dritten erfindungsgemäßen Ausführungsformen sind in gleicher Weise wie die Linearantriebe 1 gemäß der ersten erfindungsgemäßen Ausführungsform koppelbar, um mehrachsig verstellbare Anordnungen zu bilden. Im Gegensatz zur ersten und dritten erfindungsgemäßen Ausführungsform weist der Linearantrieb 1 gemäß der zweiten erfindungsgemäßen Ausführungsform aber insgesamt weniger Einzelteile und eine stabilere Grundkonstruktion auf, sodass die Bewegungsfreiheit der einzelnen Komponenten, insbesondere der beiden Führungselemente 4a, 4b weiter eingeschränkt ist und insgesamt eine noch genauere Positionierung des Bewegungselements 5 zwischen den Führungselementen 4a, 4b erzielbar ist.

In der zweiten und dritten erfindungsgemäßen Ausführungsform sind gleichartige Elemente mit gleichen Bezugszeichen versehen wie in der ersten erfindungsgemäßen Ausführungsform. Um Wiederholungen zu vermeiden, wird eine gesonderte Beschreibung der gleichwirkenden Elemente weglassen.

### Bezugszeichenliste

- 1: Piezoelektrischer Linearantrieb
- 2: Rahmen
- 2a: Basisteil
- 2a1: Eingriffsabschnitt(e) bzw. Schraubenöffnungen im Basisteil
- 2b: Gegenstück
- 2c, d: Seitenteil(e) bzw. Blattfeder(n)
- 2e, f: Kupplungsabschnitt(e) bzw. Gleitlagerschale(n)
- 2g: Blattfeder
- 2h, i: Blattfeder
- 3: Aktoreinheit
- 3a, b: Aktor(en)
- 4a, b: Führungselement(e)
- 4a1, 4b1: Periphere Abschnitte der Führungselemente 4a, 4b
- 5: Bewegungselement
- 5a: Körper
- 5b: Aufnahme(n)
- 5c: Kontaktabschnitt(e)
- 5d: Vorsprung
- 5e: Eingriffsabschnitt(e) bzw. Schraubenöffnungen im Bewegungselement
- 5f: Eingriffsabschnitt(e) bzw. Schraubenöffnungen im Bewegungselement
- 6: Federelement
- 6a: Gleitabschnitt(e)
- 6c: Kontaktabschnitt(e)
- 7: Schraubverbindung
- 8a, b: Aufnahmeelement
- 8a1, 8a2: Durchgangsloch der Aufnahme 8a
- 8b1, 8b2: Durchgangsloch der Aufnahme 8b
- A1: Abstand der Schraubenöffnungen im Basisteil
- A2: Abstand der Schraubenöffnungen im Bewegungselement
- B: Bewegungsrichtung der Führungselemente

## Patentansprüche

1. Linearantrieb (1), umfassend: eine Aktoreinheit (3) mit wenigstens einem Aktor (3a, 3b); zwei Führungselemente (4a, 4b) und ein Bewegungselement (5), wobei das Bewegungselement (5) durch eine von der Aktoreinheit (3) erzeugte Bewegung aufgrund eines Haftgleiteffekts entlang beider Führungselemente (4a, 4b) verstellbar ist, und das Bewegungselement (5) zur Verstellung entlang beider Führungselemente (4a, 4b) aufgrund des Haftgleiteffekts mit jedem der beiden Führungselemente (4a, 4b) mittels Haftreibung in Eingriff bringbar ist, **dadurch gekennzeichnet, dass**
der Linearantrieb (1) einen in sich geschlossenen Rahmen (2) aufweist,
der die Aktoreinheit (3), die beiden Führungselemente (4a, 4b) und das Bewegungselement (5) umgibt und jedes Führungselement (4a, 4b) quer zu seiner Erstreckungsrichtung federnd gegenüber dem Rahmen (2) gelagert ist, sodass jedes Führungselement (4a, 4b) federnd in Richtung des Bewegungselements (5) vorgespannt ist und deren Vorspannkräfte in verschiedenen Richtungen wirken.

2. Linearantrieb (1) nach Anspruch 1, **dadurch gekennzeichnet, dass** die Aktoreinheit (3) ausgebildet ist, um beide Führungselemente (4a, 4b) simultan und/oder synchron und/oder entlang paralleler Bewegungsbahnen in Bewegung zu versetzen.

3. Linearantrieb (1) nach einem der vorangehenden Ansprüche, **dadurch gekennzeichnet, dass** das Bewegungselement (5) im spannungsfreien Zustand der Aktoreinheit (3a, 3b) mit jedem der beiden Führungselemente (4a, 4b) mittels Haftreibung in Eingriff steht.

4. Linearantrieb (1) nach einem der vorangehenden Ansprüche, **dadurch gekennzeichnet, dass** die Aktoreinheit (3a, 3b) zwei Aktoren (3a, 3b) aufweist, die jeweils eines der beiden Führungselemente (4a, 4b) antreiben.

5. Linearantrieb (1) nach Anspruch 4, **dadurch gekennzeichnet, dass** die Aktoren (3a, 3b) jeweils an einem Ende der Führungselemente (4a, 4b) angeordnet sind und bezüglich einer Mittelebene, die senkrecht zur Bewegungsrichtung ist und die Führungselemente (4a, 4b) in Bewegungsrichtung halbiert, auf der gleichen Seite oder gegenüberliegenden Seiten angeordnet sind.

6. Linearantrieb (1) nach einem der vorangehenden Ansprüche, **dadurch gekennzeichnet, dass** jedes Führungselement (4a, 4b) und/oder das Bewegungselement (5) lediglich einen Translationsfreiheitsgrad aufweist/aufweisen, vorzugsweise in parallelen Richtungen.

7. Linearantrieb (1) nach einem der vorangehenden Ansprüche, **dadurch gekennzeichnet, dass** das Bewegungselement (5) und die Führungselemente (4a, 4b) derart gekoppelt sind, dass in der Haftphase zwischen jedem Führungselement (4a, 4b) und dem Bewegungselement (5) Kontaktkräfte in unterschiedlichen Richtungen und symmetrisch zu einer Ebene erzeugt werden.

8. Linearantrieb (1) nach einem der vorangehenden Ansprüche, **dadurch gekennzeichnet, dass** jedes Führungselement (4a, 4b) als Zylinder ausgebildet ist und sich die Bewegungsbahn des Führungselements (4a, 4b) vorzugsweise entlang der Zylinderachse erstreckt.

9. Linearantrieb (1) nach einem der vorangehenden Ansprüche, **dadurch gekennzeichnet, dass** das Bewegungselement (5) jedes Führungselement (4a, 4b) in einer eigenen rinnenförmigen Aufnahme aufnimmt, wobei die rinnenförmige Aufnahme vorzugsweise als V-förmige Nut ausgebildet ist, die sich entlang des jeweiligen Führungselements (4a, 4b) erstreckt und sich zu diesem hin öffnet.

10. Linearantrieb (1) nach einem der vorangehenden Ansprüche, **dadurch gekennzeichnet, dass** der Rahmen einen quaderförmigen Umriss aufweist.

11. Linearantrieb (1) nach einem der vorangehenden Ansprüche, **dadurch gekennzeichnet, dass** jedes Führungselement (4a, 4b) in und quer zu seiner Erstreckungsrichtung federnd gegenüber dem Rahmen (2) des Linearantrieb (1) gelagert ist, bevorzugt über wenigstens eine Blattfeder (2c, 2d; 2g, 2h, 2i).

12. Linearantrieb (1) nach einem der Ansprüche 10 oder 11, **dadurch gekennzeichnet, dass** jedes Führungselement (4a, 4b) über ein Gleitlager (2e, 2f, 8a1, 8a2, 8b1, 8b2) gleitend am Rahmen (2) gelagert ist.

13. Linearantrieb (1) nach einem der vorangehenden Ansprüche, **dadurch gekennzeichnet, dass** jedes Führungselement (4a, 4b) federnd in Richtung der Aktoreinheit (3) vorgespannt ist.

14. Linearantrieb nach einem der vorangehenden Ansprüche, **dadurch gekennzeichnet, dass** ein Federelement (6) am Bewegungselement (5) befestigt ist und jedes Führungselement (4a, 4b) in einer rinnenförmigen Aufnahme aufgenommen ist, die durch einen Abschnitt des Bewegungselements (5) und einen Abschnitt des Federelements (6) gebildet ist.

15. Linearantrieb nach Anspruch 14, **dadurch gekennzeichnet, dass** jedes Führungselement (4a, 4b) einen peripheren Abschnitt (4a1, 4b1) aufweist, der mit einem Widerstandsmaterial versehen ist, und das Federelement (6) Gleitabschnitte (6a) aufweist, die jeweils mit dem peripheren Abschnitt (4a1, 4b1) des entsprechenden Führungselements (4a, 4b) in elektrisch leitendem Kontakt stehen.

16. Linearantrieb (1) nach einem der vorangehenden Ansprüche, **dadurch gekennzeichnet, dass** der Rahmen (2) und/oder das Bewegungselement (5) eine mechanische Schnittstelle aufweist/aufweisen, die mit der mechanischen Schnittstelle eines identischen Linearantriebs (1) koppelbar ist/sind, sodass die Stellwege (X, Y, Z) der aneinander gekoppelten Linearantriebe in zueinander senkrecht stehenden Ebenen verlaufen.

17. Anordnung, umfassend zwei oder drei Linearantriebe (1) nach einem der vorangehenden Ansprüche, **dadurch gekennzeichnet, dass** die Linearantriebe (1) derart aneinander gekoppelt sind, dass die Stellwege (X, Y, Z) der aneinander gekoppelten Linearantriebe in zwei bzw. drei zueinander senkrecht stehenden Ebenen verlaufen.

18. Methode zur Bestimmung der Position des Bewegungselements (5) mit dem Linearantrieb nach Anspruch 15, **dadurch gekennzeichnet, dass** ein Widerstand von einem Punkt (P) des peripheren Abschnitts (4a1) eines Führungselements (4a) zu einem Punkt (Q) des peripheren Abschnitts (4b1) des anderen Führungselements (4b) erfasst wird.

## Claims

1. Linear drive (1), comprising: an actuator unit (3) with at least one actuator (3a, 3b); two guide elements (4a, 4b) and a movement element (5), wherein the movement element (5) can be displaced along both guide elements (4a, 4b) as a result of a stick-slip effect by means of a movement generated by the actuator unit (3), and the movement element (5) can be brought into engagement with each of the two guide elements (4a, 4b) by means of static friction in order to be displaced along both guide elements (4a, 4b) as a result of the stick-slip effect, **characterized in that** the linear drive (1) has a closed frame (2), which surrounds the actuator unit (3), the two guide elements (4a, 4b) and the movement element (5), and wherein each guide element (4a, 4b) is resiliently mounted with respect to the frame (2) transverse to its direction of extension, so that each guide element (4a, 4b) is resiliently pretensioned in the direction of the movement element (5) and their pretension forces act in different directions.

2. Linear drive (1) according to claim 1, **characterized in that** the actuator unit (3) is embodied to cause to move both guide elements (4a, 4b) simultaneously and/or synchronously and/or along parallel trajectories.

3. Linear drive (1) according to one of the preceding claims, **characterized in that** the movement element (5) is, in the stress-free state of the actuator unit (3a, 3b), engaged with each of the two guide elements (4a, 4b) by means of static friction.

4. Linear drive (1) according to one of the preceding claims, **characterized in that** the actuator unit (3a, 3b) comprises two actuators (3a, 3b) which each drive one of the two guide elements (4a, 4b).

5. Linear drive (1) according to claim 4, **characterized in that** the actuators (3a, 3b) are each arranged at one end of the guide elements (4a, 4b) and, with respect to a mid-plane that is perpendicular to the moving direction and bisects the guide elements (4a, 4b) in the moving direction, are arranged on the same side or on opposite sides.

6. Linear drive (1) according to one of the preceding claims, **characterized in that** each guide element (4a, 4b) and/or the movement element (5) only has/have one translational degree of freedom, preferably in parallel directions.

7. Linear drive (1) according to one of the preceding claims, **characterized in that** the movement element (5) and the guide elements (4a, 4b) are coupled such that in the stick phase between each guide element (4a, 4b) and the movement element (5), contact forces are generated in different directions and symmetrically to one plane.

8. Linear drive (1) according to one of the preceding claims, **characterized in that** each guide element (4a, 4b) is embodied as a cylinder and the trajectory of the guide element (4a, 4b) preferably extends along the cylinder axis.

9. Linear drive (1) according to one of the preceding claims, **characterized in that** the movement element (5) receives each guide element (4a, 4b) in a separate channel-like seating, wherein the channel-like seating is preferably embodied as a V-shaped groove which extends along the respective guide element (4a, 4b) and opens towards it.

10. Linear drive (1) according to one of the preceding claims, **characterized in that** the frame has a cuboid outline.

11. Linear drive (1) according to one of the preceding claims, **characterized in that** each guide element (4a, 4b) is resiliently mounted with respect to the frame (2) of the linear drive (1) in and transverse to its direction of extension, preferably via at least one leaf spring (2c, 2d; 2g, 2h, 2i).

12. Linear drive (1) according to one of claims 10 or 11, **characterized in that** each guide element (4a, 4b) is mounted, via a sliding bearing (2e, 2f, 8a1, 8a2, 8b1, 8b2) at the frame (2) in a sliding manner.

13. Linear drive (1) according to one of the preceding claims, **characterized in that** each guide element (4a, 4b) is resiliently pretensioned in the direction of the actuator unit (3).

14. Linear drive according to one of the preceding claims, **characterized in that** a spring element (6) is fixed to the movement element (5), and each guide element (4a, 4b) is received in a channel-like seating which is formed by a section of the movement element (5) and a section of the spring element (6).

15. Linear drive according to claim 14, **characterized in that** each guide element (4a, 4b) has a peripheral section (4a1, 4b1) which is provided with a resistance material, and the spring element (6) has slide segments (6a) which are each in electrically conductive contact with the peripheral section (4a1, 4b1) of the corresponding guide element (4a, 4b).

16. Linear drive (1) according to one of the preceding claims, **characterized in that** the frame (2) and/or the movement element (5) has/have a mechanical interface which is/are couplable to the mechanical interface of an identical linear drive (1), so that the travel ranges (X, Y, Z) of the linear drives coupled to each other extend in planes perpendicular with respect to each other.

17. Arrangement, comprising two or three linear drives (1) according to one of the preceding claims, **characterised in that** the linear drives (1) are coupled to each other such that the travel ranges (X, Y, Z) of the linear drives coupled to each other extend in two or three planes, respectively, perpendicular with respect to each other.

18. Method of determining the position of the movement element (5) with the linear drive according to claim 15, **characterised in that** a resistance from one point (P) of the peripheral section (4a1) of a guide element (4a) to a point (Q) of the peripheral section (4b1) of the other guide element (4b) is detected.

## Revendications

1. Entraînement linéaire (1), comprenant: un bloc actionneur (3) avec au moins un actionneur (3a, 3b) ; deux éléments de guidage (4a, 4b) et un élément de déplacement (5), dans lequel l'élément de déplacement (5) peut, du fait d'un phénomène de broutement le long des deux éléments de guidage (4a, 4b), être réglé grâce à un déplacement produit par le bloc actionneur (3) et l'élément de déplacement (5) peut être mis en prise avec chacun des deux éléments de guidage (4a, 4b) au moyen d'un frottement statique en vue d'un réglage le long des deux éléments de guidage (4a, 4b) du fait du phénomène de broutement, **caractérisé en ce que**
l'entraînement linéaire (1) présente un cadre (2) fermé sur lui-même,
qui entoure le bloc actionneur (3), les deux éléments de guidage (4a, 4b) et l'élément de déplacement (5), et chaque élément de guidage (4a, 4b) est monté de manière transversale par rapport à sa direction d'extension et de manière élastique par rapport au cadre (2), de sorte que chaque élément de guidage (4a, 4b) est précontraint de manière élastique en direction de l'élément de déplacement (5) et ses forces de précontrainte s'exercent dans des directions différentes.

2. Entraînement linéaire (1) selon la revendication 1, **caractérisé en ce que** le bloc actionneur (3) est conçu pour mettre en mouvement les deux éléments de guidage (4a, 4b) de manière simultanée et/ou synchrone et/ou le long de trajectoires de déplacement parallèles.

3. Entraînement linéaire (1) selon l'une quelconque des revendications précédentes, **caractérisé en ce que** l'élément de déplacement (5), à l'état hors tension du bloc actionneur (3a, 3b), est en prise avec chacun des deux éléments de guidage (4a, 4b) au moyen d'un frottement statique.

4. Entraînement linéaire (1) selon l'une quelconque des revendications précédentes, **caractérisé en ce que** le bloc actionneur (3a, 3b) présente deux actionneurs (3a, 3b) qui entraînent respectivement un des deux éléments de guidage (4a, 4b).

5. Entraînement linéaire (1) selon la revendication 4, **caractérisé en ce que** les actionneurs (3a, 3b) sont agencés respectivement à une extrémité des éléments de guidage (4a, 4b) et sont agencés sur le même côté ou sur des côtés opposés par rapport à un plan médian qui est perpendiculaire à la direction de déplacement et qui divise les éléments de guidage (4a, 4b) dans la direction de déplacement.

6. Entraînement linéaire (1) selon l'une quelconque des revendications précédentes, **caractérisé en ce que** chaque élément de guidage (4a, 4b) et/ou l'élément de déplacement (5) présente (nt) seulement un degré de liberté de translation, de manière préférée dans des directions parallèles.

7. Entraînement linéaire (1) selon l'une quelconque des revendications précédentes, **caractérisé en ce que** l'élément de déplacement (5) et les éléments de guidage (4a, 4b) sont couplés de telle manière que, pendant la phase d'adhérence, des forces de contact sont générées entre chaque élément de guidage (4a, 4b) et l'élément de déplacement (5) dans différentes directions et de manière symétrique par rapport à un plan.

8. Entraînement linéaire (1) selon l'une quelconque des revendications précédentes, **caractérisé en ce que** chaque élément de guidage (4a, 4b) est réalisé sous la forme d'un cylindre et la trajectoire de déplacement de l'élément de guidage (4a, 4b) s'étend de manière préférée le long de l'axe de cylindre.

9. Entraînement linéaire (1) selon l'une quelconque des revendications précédentes, **caractérisé en ce que** l'élément de déplacement (5) accueille chaque élément de guidage (4a, 4b) dans un logement en forme de gouttière dédié, dans lequel le logement en forme de gouttière est réalisé de manière préférée sous la forme d'une rainure en forme de V qui s'étend le long de l'élément de guidage (4a, 4b) respectif et s'ouvre par rapport à celui-ci.

10. Entraînement linéaire (1) selon l'une quelconque des revendications précédentes, **caractérisé en ce que** le cadre présente un contour cubique.

11. Entraînement linéaire (1) selon l'une quelconque des revendications précédentes, **caractérisé en ce que** chaque élément de guidage (4a, 4b) est monté, dans sa direction d'extension et de manière transversale par rapport à sa direction d'extension, de manière élastique par rapport au cadre (2) de l'entraînement linéaire (1), de manière préférée par l'intermédiaire d'au moins un ressort à lame (2c, 2d ; 2g, 2h, 2i).

12. Entraînement linéaire (1) selon la revendication 10 ou 11, **caractérisé en ce que** chaque élément de guidage (4a, 4b) est monté coulissant sur le cadre (2) par l'intermédiaire d'un palier lisse (2e, 2f, 8a1, 8a2, 8b1, 8b2).

13. Entraînement linéaire (1) selon l'une quelconque des revendications précédentes, **caractérisé en ce que** chaque élément de guidage (4a, 4b) est précontraint de manière élastique en direction du bloc actionneur (3).

14. Entraînement linéaire selon l'une quelconque des revendications précédentes, **caractérisé en ce qu'**un élément formant ressort (6) est fixé à l'élément de déplacement (5) et chaque élément de guidage (4a, 4b) est accueilli dans un logement en forme de gouttière formé par une partie de l'élément de déplacement (5) et une partie de l'élément formant ressort (6).

15. Actionneur linéaire selon la revendication 14, **caractérisé en ce que** chaque élément de guidage (4a, 4b) présente une partie périphérique (4a1, 4b1) munie d'un matériau résistif, et l'élément formant ressort (6) présente des parties de coulissement (6a) qui sont en contact électriquement conducteur respectivement avec la partie périphérique (4a1, 4b1) de l'élément de guidage (4a, 4b) correspondant.

16. Entraînement linéaire (1) selon l'une quelconque des revendications précédentes, **caractérisé en ce que** le cadre (2) et/ou l'élément de déplacement (5) présente (nt) une interface mécanique qui peu(ven)t être couplée(s) à l'interface mécanique d'un entraînement linéaire (1) identique, de sorte que les courses de réglage (X, Y, Z) des entraînements linéaires couplés les uns aux autres s'étendent dans des plans perpendiculaires les uns aux autres.

17. Agencement, comprenant deux ou trois entraînements linéaires (1) selon l'une quelconque des revendications précédentes, **caractérisé en ce que** les entraînements linéaires (1) sont couplés les uns aux autres de telle manière que les courses de réglage (X, Y, Z) des entraînements linéaires couplés les uns aux autres s'étendent dans deux ou trois plans perpendiculaires les uns aux autres.

18. Procédé de détermination de la position de l'élément de déplacement (5) avec l'entraînement linéaire selon la revendication 15, **caractérisé en ce qu'**une résistance est détectée à partir d'un point (P) de la partie périphérique (4a1) d'un élément de guidage (4a) jusqu'à un point (Q) de la partie périphérique (4b1) de l'autre élément de guidage (4b).
